# EUROPÄISCHE PATENTSCHRIFT

(11) **EP 0 660 480 B1**
(45) Veröffentlichungstag und Bekanntmachung des Hinweises auf die Patenterteilung: **13.08.1997**
(21) Anmeldenummer: 94810694.3
(22) Anmeldetag: 05.12.1994
(51) Int. Cl.: H02G 5/06

(54) **Stützisolator**
Supporting insulator
Isolateur de support

(30) Priorität: 23.12.1993 DE 4344043
(43) Veröffentlichungstag der Anmeldung: 28.06.1995
(73) Patentinhaber: ABB RESEARCH LTD., 8050 Zürich (CH)
(72) Erfinder: Ritzer, Leopold, CH-5432 Neuenhof (CH)
(74) Vertreter: Kaiser, Helmut

(56) Entgegenhaltungen:
- EP-A- 0 254 014
- EP-A- 0 288 715
- DE-U- 7 129 392
- RESEARCH DISCLOSURE, Nr.257, September 1985, HAMPSHIRE, GB Seiten 470 - 472 ANONYMOUSLY 'GIS insulator of cross-linked polyethylene'

## Beschreibung

### TECHNISCHES GEBIET

Die Erfindung geht aus von einem Stützisolator gemäss dem Oberbegriff des Anspruchs 1.

### STAND DER TECHNIK

Aus der Europäischen Patentschrift 0 288 715 B1 ist ein Isolator mit einem Isolatorkörper bekannt. Der Isolatorkörper ist mit einem Druckmittel beaufschlagbar. Als Druckmittel sind Isoliergase wie beispielsweise SF₆ oder auch Mineralöl vorstellbar. Ferner könnte der Isolator auch mit einem Vakuum beaufschlagt werden. Der Isolatorkörper besteht aus einem gehärteten Giessharz. Durch den Isolatorkörper führt eine Eingussarmatur, die einen metallischen Tragkörper enthält. Die Eingussarmatur ist im Betrieb mit Hochspannung beaufschlagt. Der Tragkörper weist eine Mantelfläche auf, die mit einer druckmitteldicht aufgebrachten Koppelschicht, welche elastisch ausgebildet ist, versehen ist. Der Isolatorkörper ist mit dieser elastischen Koppelschicht gossen.

Derartige elastisch ausgebildete Koppelschichten sind für Isolatoren mit vergleichsweise kleiner mechanischer Beanspruchung gut geeignet. Für die moderneren Anlagen, in denen die Isolatoren immer höher belastet werden, sind derartige elastischen Koppelschichten nicht mehr geeignet, da eine bessere Haftung zwischen der Mantelfläche des Tragkörpers und dem Isolatorkörper verlangt wird.

### DARSTELLUNG DER ERFINDUNG

Die Erfindung, wie sie in dem unabhängigen Anspruch gekennzeichnet ist, löst die Aufgabe, einen Stützisolator zu schaffen, der einfach aufgebaut ist und der für vergleichsweise hohe mechanische Belastungen ausgelegt ist.

Der Stützisolator weist einen mit Druckmittel beaufschlagbaren Isolatorkörper aus gehärtetem Giessharz und mindestens eine mit Hochspannung beaufschlagte, den Isolatorkörper durchdringende Eingussarmatur auf. Der metallische Tragkörper weist eine Mantelfläche auf. Die Mantelfläche des Tragkörpers ist mit einer Haftschicht versehen, die besser auf der Mantelfläche haftet als das gehärtete Giessharz. Das gehärtete Giessharz ist mit der Haftschicht vernetzt.

Wird als gehärtetes Giessharz ein Epoxidharz eingesetzt und wird als die Haftschicht ein Klebstoff auf Epoxidharzbasis auf die Mantelfläche aufgebracht, so wird eine besonders feste Verbindung zwischen Isolatorkörper und Eingussarmatur erreicht. Wird als Klebstoff ein Einkomponentenklebstoff eingesetzt, so ergibt sich eine besonders einfache Verarbeitung. Der Einkomponentenklebstoff Araldit AV 119 der Firma CIBA-GEIGY ( Araldit ist ein eingetragenes Warenzeichen der Firma CIBA-GEIGY) lässt sich besonders einfach verarbeiten, da er thixotrop ist, ferner haftet er sehr gut auf der Mantelfläche, wenn er vor dem Umgiessen der Eingussarmatur gehärtet wird.

Die weiteren Ausgestaltungen der Erfindung sind Gegenstände der abhängigen Ansprüche.

Die mit der Erfindung, und ihren Weiterbildungen erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine erste schematisch dargestellte Ausführungsform eines Stützisolators, und
Fig.2 eine zweite schematisch dargestellte Ausführungsform eines Stützisolators.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

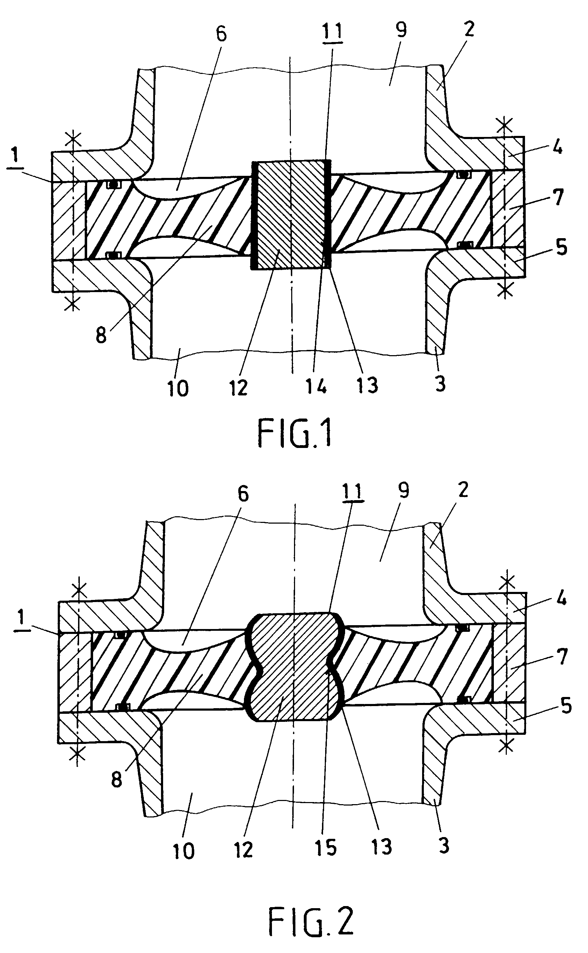

In Fig.1 und Fig.2 bezeichnet 1 ein von zwei rohrförmigen, metallischen Kapselungsteilen 2,3 gebildetes und mit einem Isoliermittel gefülltes Gehäuse. Als Isoliermittel sind Isoliergase unter Druck, wie beispielsweise SF₆, oder auch Mineralöl vorstellbar, ebenso auch ein Vakuum. Zwischen Ringflanschen 4,5 ist ein scheibenförmiger Stützisolator 6 mit einer seinen Aussenrand bildenden, metallischen Ringarmatur 7 eingespannt. Die Einspannung wird hier mittels einer Verschraubung hergestellt. Der Stützisolator 6 weist einen scheibenförmig ausgebildeten Isolatorkörper 8 aus einem Giessharz auf. Der Stützisolator 6 schottet zwei Druckräume 9,10 des Gehäuses 1 druckdicht gegeneinander ab. Der Isolatorkörper 8 kann anstelle der Scheibenform auch eine andere Ausgestaltung aufweisen. Der Isolatorkörper 8 trägt mindestens eine zur Stromführung vorgesehene und den Isolatorkörper 8 durchdringende Eingussarmatur 11. Im Betrieb ist die Eingussarmatur 11 mit Hochspannung beaufschlagt. Die Eingussarmatur 11 besteht aus einem im wesentlichen zylinderförmig ausgebildeten Tragkörper 12 und einer auf dessen Mantelfläche 14,15 dünn aufgetragenen Haftschicht 13. Der Tragkörper 12 ist aus elektrisch leitendem Material, beispielsweise Aluminium oder Kupfer oder Bronze oder Messing oder Stahl, gefertigt. In der Ausführung gemäss Fig.1 ist die Mantelfläche 14 als glatte zylindrische Fläche ausgebildet. In der Ausführung gemäss Fig.2 ist die Mantelfläche 15 als gewellte Fläche ausgebildet, die axial wirkende Kräfte aufnehmen kann.

Bei der Herstellung des Isolators werden die Mantelflächen 14, 15 unmittelbar vor dem Auftragen der Haftschicht 13 sandgestrahlt, um eine gute Bindung der Haftschicht 13 an den Tragkörper 12 zu erreichen. Nach dem Sandstrahlen werden die aufgerauhten Mantelflächen 14,15 chemisch mit einem Fettlöser wie Aceton oder Trichloräthylen entfettet. Für die Haftschicht 13 wird hier ein Einkomponentenklebstoff Araldit AV 119 verwendet. Die Bezeichnung Araldit AV 119 ist ein eingetragenes Warenzeichen der Firma CIBA-GEIGY, Basel. Der Einkomponentenklebstoff Araldit AV 119 ist ein formulierter Epoxidharz-Klebstoff auf der Basis von Bisphenol A.

Der Einkomponentenklebstoff Araldit AV 119 wird mit einer Schichtdicke von 0,05 bis 1 mm auf die entfettete Mantelfläche 14,15 aufgetragen und während einer Stunde bei 120°C ausgehärtet. Erst danach wird die Eingussarmatur 11 in eine Giessform eingebracht und mit dem Isolatorkörper 8 umgossen. Der Isolatorkörper 8 schrumpft beim Abkühlen und drückt auf die Haftschicht 13 und verbindet sich innig mit ihr.

Die Haftschicht 13 ist verbessert die Festigkeit der Bindung zwischen dem Isolatorkörper 8 und dem Tragkörper 12 wesentlich. Die Haftschicht 13 ist nicht elastisch, sie gibt den auf den Isolatorkörper 8 einwirkenden Biegemomenten nicht nach. Die Haftung ist so stark, dass es trotz der auf die Haftschicht 13 einwirkenden Biegemomente nicht zu Ablösungen zwischen der Eingussarmatur 11 und dem Isolatorkörper 8 kommt. Die für den Isolatorkörper 8 verwendeten Giessharze sind so ausgelegt, dass die beim Schrumpfen auftretenden mechanischen Spannungen nicht zu einer Rissbildung führen können.

Der Stützisolator 6 wird durch Reaktionskräfte, die vom Gehäuse 1 oder von der Eingussarmatur 11 her auf den Isolatorkörper 8 übertragen werden, oder durch Kräfte infolge einer Druckdifferenz zwischen den beiden Druckräumen 9 und 10 belastet. Durch die Haftschicht 13 wird der Zusammenhalt zwischen dem Tragkörper 12 und dem Isolatorkörper 8 so verbessert, dass bei den vorgesehenen maximalen Kräften keine Ablösungserscheinungen auftreten können.

Es ist möglich, dass der Übergang zwischen dem Tragkörper 12 und dem Isolatorkörper 8 dielektrisch ungleichmässig belastet wird, da entweder leitende Spitzen am Tragkörper 12 oder Lufteinschlüsse im Isolatorkörper 8 zu Feldverzerrungen führen können. Um derartige Feldverzerrungen auszugleichen, kann es sinnvoll sein, den Einkomponentenklebstoff mit einem leitenden oder halbleitenden Pulver zu dotieren, um so die Haftschicht 13 zu einer Äquipotentialfläche zu machen, mit deren Hilfe eine Feldsteuerung in diesem Bereich möglich wird. Auf diese Art kann sicher vermieden werden, dass in diesem mechanisch hochbelasteten Bereich Teilentladungen auftreten, welche die mechanische Festigkeit des Giessharzes oder des Einkomponentenklebstoffs gefährden können. Auf diese Art entsteht ein mechanisch hoch belastbarer und dielektrisch besonders dauerfester Stützisolator 6.

Wird das Giessharz direkt um den sandgestrahlten und entfetteten Tragkörper 12 gegossen, so ergibt sich eine Zugfestigkeit der Verbindungsstelle von σ_{z} = 8 MPa bis maximal 12 MPa. Beim erfindungsgemässen Stützisolator dagegen wird die Zugfestigkeit wesentlich gesteigert, es ergibt sich ein Wert σ_{z} = 22 MPa bis 29 MPa.

### BEZEICHNUNGSLISTE

- 1: Gehäuse
- 2,3: Kapselungsteil
- 4,5: Ringflansch
- 6: Stützisolator
- 7: Ringarmatur
- 8: Isolatorkörper
- 9,10: Druckraum
- 11: Eingussarmatur
- 12: Tragkörper
- 13: Haftschicht
- 14,15: Mantelfläche

## Patentansprüche

1. Stützisolator (6) mit einem mit Druckmittel beaufschlagbaren Isolatorkörper (8) aus gehärtetem Giessharz und mit mindestens einer mit Hochspannung beaufschlagten, den Isolatorkörper (8) durchdringenden Eingussarmatur (11), welche einen metallischen Tragkörper (12) mit einer Mantelfläche (14,15) aufweist, dadurch gekennzeichnet,
- dass die Mantelfläche (14,15) des Tragkörpers (12) mit einer Haftschicht (13) versehen ist, die besser auf der Mantelfläche (14,15) haftet als das gehärtete Giessharz, und
- dass das gehärtete Giessharz mit der Haftschicht (13) vernetzt ist.

2. Stützisolator nach Anspruch 1, dadurch gekennzeichnet,
- dass als gehärtetes Giessharz ein Epoxidharz eingesetzt ist, und
- dass für die Haftschicht (13) ein Klebstoff auf Epoxidharzbasis auf die Mantelfläche (14,15) aufgebracht wird.

3. Stützisolator nach Anspruch 2, dadurch gekennzeichnet,
- dass als Klebstoff ein Einkomponentenklebstoff eingesetzt wird.

4. Stützisolator nach Anspruch 3, dadurch gekennzeichnet,
- dass der Epoxidharz-Einkomponentenklebstoff nach dem Aufbringen auf die Mantelfläche (14,15) und vor dem Umgiessen der Eingussarmatur (11) gehärtet wird.

5. Stützisolator nach Anspruch 1, dadurch gekennzeichnet,
- dass die Mantelfläche (14,15) vor dem Aufbringen der Haftschicht (13) sandgestrahlt und mit einem Fettlösungsmittel gereinigt wird.

6. Stützisolator nach Anspruch 1, dadurch gekennzeichnet,
- dass die Mantelfläche (14,15) vor dem Aufbringen der Haftschicht (13) mit Chrom-Schwefelsäure behandelt wird.

7. Stützisolator nach Anspruch 2, dadurch gekennzeichnet,
- dass der Klebstoff auf Epoxidharzbasis mit einem leitenden oder halbleitenden Pulver dotiert ist.

8. Stützisolator nach Anspruch 1, dadurch gekennzeichnet,
- dass die Haftschicht (13) eine Dicke von 0,05 mm bis 0,1 mm aufweist.

## Claims

1. Post insulator (6) having an insulator body (8), of cured cast resin, which can be subjected to a pressure medium, and having at least one potted fitting (11), penetrating the insulator body (8) and subjected to high voltage, which has a metallic support body (12) having a lateral surface (14, 15)
wherein
- the lateral surface (14, 15) of the support body (12) is provided with a bonding layer (13) which adheres better to the lateral surface (14, 15) than the cured cast resin,
and
- in that the cured cast resin is cross-linked with the bonding layer (13).

2. Post insulator as claimed in Claim 1,
wherein
- an epoxy resin is used as the cured cast resin,
and
- in that for the bonding layer (13), an adhesive based on epoxy resin is applied to the lateral surface (14, 15).

3. Post insulator as claimed in Claim 2,
wherein
- a single-component adhesive is used as the adhesive.

4. Post insulator as claimed in Claim 3,
wherein
- the epoxy resin single-component adhesive is cured after application to the lateral surface (14, 15) and before potting the potted fitting (11).

5. Post insulator as claimed in Claim 1,
wherein
- the lateral surface (14, 15) is sandblasted and cleaned with a grease solvent before application of the bonding layer (13)

6. Post insulator as claimed in Claim 1,
wherein
- the lateral surface (14, 15) is treated with chromo/sulphuric acid before application of the bonding layer (13).

7. Post insulator as claimed in Claim 2,
wherein
- the adhesive based on epoxy resin is doped with a conducting or semiconducting powder.

8. Post insulator as claimed in Claim 1,
wherein
- the bonding layer (13) has a thickness of from 0.05mm to 0.1 mm.

## Revendications

1. Isolateur de support (6) muni d'un corps d'isolateur (8) en résine de moulage durcie pouvant être exposé à un moyen de pression et d'au moins une armature de coulée (11) qui traverse le corps d'isolateur (8) et qui est exposée à la haute tension, laquelle présente un corps porteur (12) métallique muni d'une surface d'enveloppe (14, 15), caractérisé par le fait
- que la surface d'enveloppe (14, 15) du corps porteur (12) est munie d'une couche d'adhérence (13) qui adhère mieux sur la surface d'enveloppe (14, 15) que sur la résine de moulage durcie, et
- que la résine de moulage durcie est réticulée avec la couche d'adhérence (13).

2. Isolateur de support selon la revendication 1, caractérisé par le fait
- que la résine de moulage durcie utilisée est une résine époxy, et
- que la couche d'adhérence (13) appliquée sur la surface d'enveloppe (14, 15) est une colle à base d'époxy.

3. Isolateur de support selon la revendication 2, caractérisé par le fait
- que la colle utilisée est une colle monocomposante.

4. Isolateur de support selon la revendication 3, caractérisé par le fait
- que la colle monocomposante à base de résine époxy est durcie après son application sur la surface d'enveloppe (14, 15) et avant le moulage de l'armature de coulée (11).

5. Isolateur de support selon la revendication 1, caractérisé par le fait
- que la surface d'enveloppe (14, 15) est sablée avant l'application de la couche d'adhérence (13) puis nettoyée avec un agent solvant des graisses.

6. Isolateur de support selon la revendication 1, caractérisé par le fait
- que la surface d'enveloppe (14, 15) est traitée avec un mélange sulfo-chromique avant l'application de la couche d'adhérence (13).

7. Isolateur de support selon la revendication 2, caractérisé par le fait
- que la colle à base de résine époxy est dopée avec une poudre conductrice ou semiconductrice.

8. Isolateur de support selon la revendication 1, caractérisé par le fait
- que la couche d'adhérence (13) présente une épaisseur comprise entre 0,05 mm et 0,1 mm.
